# EUROPÄISCHE PATENTSCHRIFT

(11) **EP 1 215 081 B1**
(45) Veröffentlichungstag und Bekanntmachung des Hinweises auf die Patenterteilung: **29.11.2006**
(21) Anmeldenummer: 01129609.2
(22) Anmeldetag: 12.12.2001
(51) Int. Cl.: B60Q 1/26

(54) **Leuchte für Fahrzeuge, vorzugsweise für Kraftfahrzeuge**
Vehicle light
Feu pour véhicule

(30) Priorität: 16.12.2000 DE 20021312 U
(43) Veröffentlichungstag der Anmeldung: 19.06.2002
(73) Patentinhaber: Schefenacker Vision Systems Germany GmbH, 71409 Schwaikheim (DE)
(72) Erfinder: Zimmermann, Werner, 73113 Ottenbach (DE); Rommel, Bernd, 70736 Fellbach-Schmiden (DE)
(74) Vertreter: Jackisch-Kohl, Anna-Katharina

(56) Entgegenhaltungen:
- EP-A- 0 933 255
- EP-A- 0 972 680
- WO-A-98/28165
- DE-A- 19 749 047
- DE-A- 19 813 596
- DE-U- 29 804 489
- DE-U- 29 909 650
- US-A- 5 303 130
- US-A- 6 074 078

## Beschreibung

Die Erfindung betrifft eine Einrichtung an einem Fahrzeug, vorzugsweise einem Kraftfahrzeug, nach dem Oberbegriff des Anspruches 1.

Es ist bekannt, Leuchten an der Karosserie des Fahrzeuges als gesonderte Einheiten zu befestigen. Die Leuchten werden entweder in Einbauöffnungen in der Karosserie eingebaut oder auf die Außenseite der Karosserie aufgesetzt.

Bei einer bekannten Einrichtung (DE 298 04 489 U) wird in die Einbauöffnung der Karosserie eine Lichtscheibe eingesetzt, die mit einem Abdeckteil an der Karosserie gehalten wird. Das Abdeckteil hat Öffnungen, in die Leuchtmittel ragen, deren Licht durch die Lichtscheibe nach außen tritt.

Bei einer anderen bekannten Einrichtung (DE-A-197 49 047) ist in die Einbauöffnung der Karosserie eine Lichtscheibe eingesetzt, die ein ein Leuchtmittel aufnehmendes Gehäuse verschließt. Die Lichtscheibe liegt mit ihrem Rand an einem nach innen abgewinkelten Rand der Einbauöffnung an und ist mit einem lichtdurchlässigen Überzug versehen, mit dem auch die Karosserie überzogen ist. Ist das Leuchtmittel eingeschaltet, treten die von ihr ausgehenden Strahlen durch die Lichtscheibe und den lichtdurchlässigen Überzug nach außen. Ist das Leuchtmittel nicht eingeschaltet, wird die Lichtscheibe durch den Überzug weitgehend verdeckt. Die Befestigung der Lichtscheibe und damit der gesamten Leuchte am abgewinkelten Rand der Einbauöffnung ist umständlich und schwierig.

Es ist eine Einrichtung bekannt (US-A-6 074 078), die eine Leuchte aufweist, die an einer Heckklappe des Kraftfahrzeuges montiert ist.

Es ist ferner bekannt (DE 299 09 650 U), ein Fahrzeugemblem durchsichtig auszubilden, damit es von wenigstens einer Lichtquelle beliebiger Lichtfarbe durchstrahlt werden kann.

Es ist schließlich eine Einrichtung bekannt (EP-A-0 972 680), die einen Außenrückblickspiegel aufweist, dessen Gehäuse aus lichtdurchlässigem Kunststoff besteht und der mit einer lichtdurchlässigen Beschichtung umkleidet ist.

Der Erfindung liegt die Aufgabe zugrunde, die gattungsgemäße Einrichtung so auszubilden, daß mit ihr eine einfache Montage am Fahrzeug gewährleistet ist.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung gelangt das vom Leuchtmittel der Leuchte ausgesandte Licht durch den Karosserieteil des Fahrzeuges nach außen. Der Karosserieteil ist im Lichtdurchtrittsbereich mit wenigstens einer Öffnung versehen, in der die lichtdurchlässige Lichtscheibe liegt. Sie ist außenseitig mit der Schutzschicht, vorzugsweise einer Lackschicht, versehen, die vorzugsweise gleichen Farbton wie die übrige Lackierung des Fahrzeuges hat. In diesem Falle ist die Leuchte von außen nicht erkennbar, da der Lichtdurchtrittsbereich von der Schutzschicht überdeckt ist. Erst wenn das Leuchtmittel der Leuchte eingeschaltet wird, dringen die von ihm ausgesandten Strahlen durch die Lichtscheibe und die Schutzschicht nach außen, die so dünn ist, daß das Licht in erforderlichem Maße abgestrahlt werden kann. Die Leuchte läßt sich mit dem umlaufenden Rand des Gehäuses einfach an der Innenseite des Karosserieteiles anliegend befestigen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Rückansicht ein Kraftfahrzeug mit einer erfindungsgemäßen Leuchte,
- Fig. 2: in vergrößerter Darstellung eine Ansicht der Leuchte gemäß Fig. 1,
- Fig. 3: in vergrößerter Darstellung einen Schnitt längs der Linie III-III in Fig. 2,
- Fig. 4: in vergrößerter Darstellung die eine Hälfte der Leuchte gemäß Fig. 3,
- Fig. 5: in einem Schnitt eine zweite Ausführungsform einer erfindungsgemäßen Leuchte.

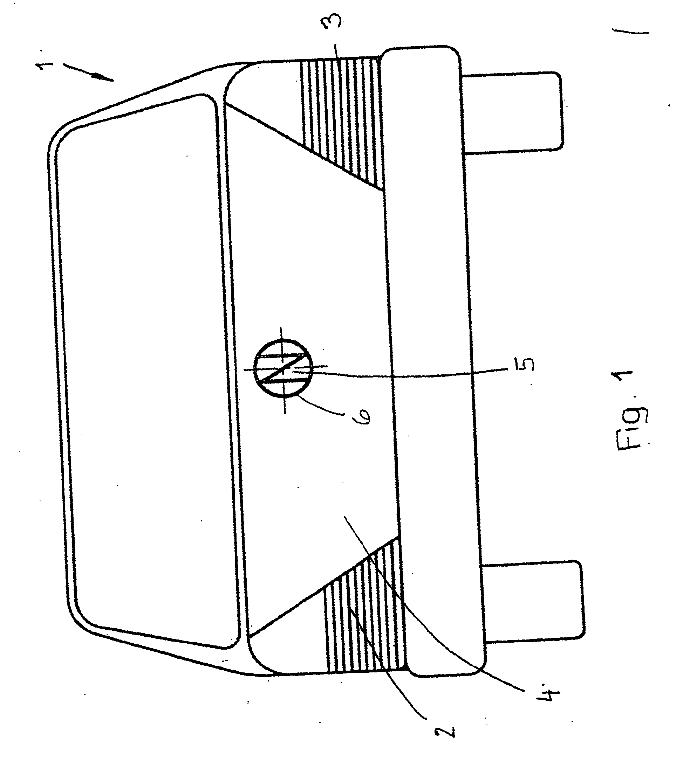

Fig. 1 zeigt in Rückansicht ein Kraftfahrzeug 1, das in bekannter Weise zwei Heckleuchten 2 und 3 aufweist. Zwischen den Heckleuchten 2, 3 erstreckt sich ein Kofferraumdeckel 4, dessen heruntergezogener Bereich mit einer Leuchte 5 versehen ist, die beispielsweise als dritte Bremsleuchte ausgebildet ist. Diese Leuchte 5 befindet sich auf der Innenseite des Kofferraumdekkels 4 im Bereich hinter einem Kraftfahrzeugemblem 6, das je nach Hersteller des Kraftfahrzeuges die unterschiedlichsten Formen und/oder Ausbildungen haben kann.

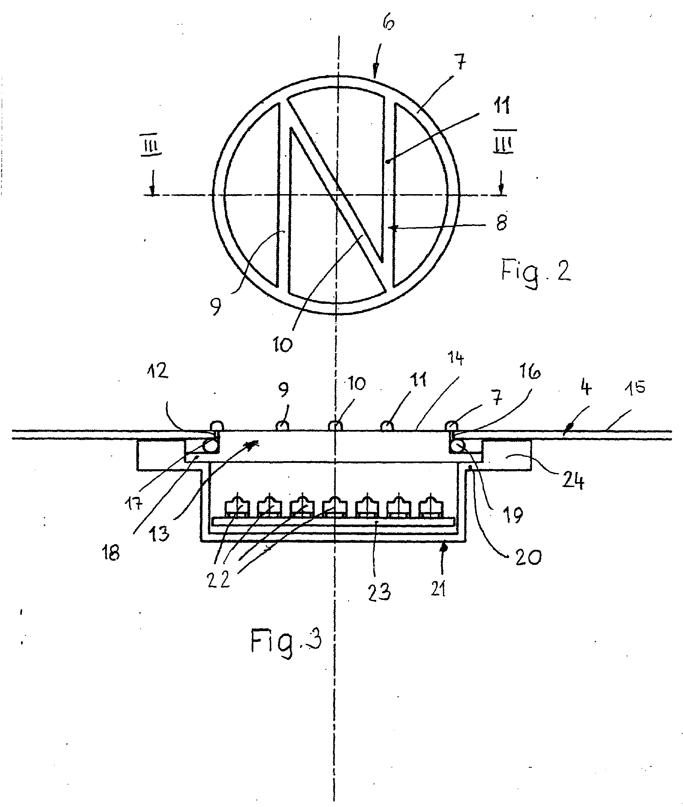

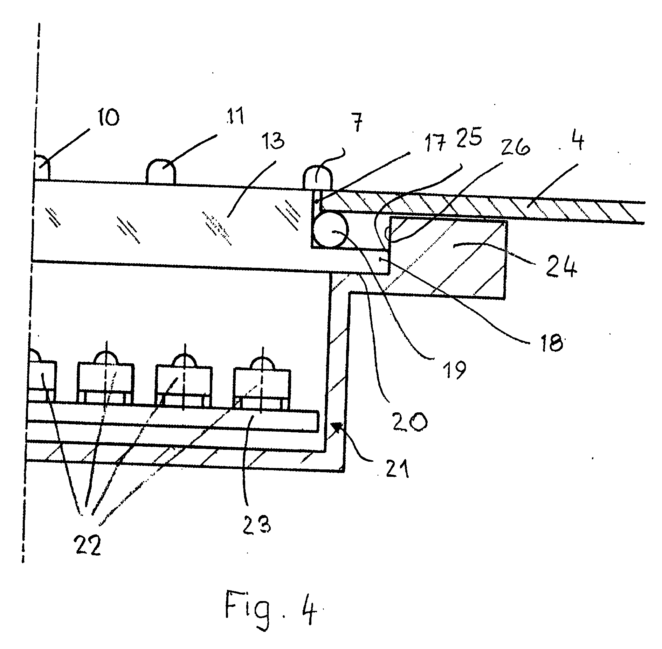

Im dargestellten Ausführungsbeispiel hat das Emblem einen kreisförmigen Ring 7 (Fig. 2), der ein N 8 umfaßt. Dieser Buchstabe hat zwei parallel zueinander liegende Stege 9, 11, die an ihren einander gegenüberliegenden Enden durch einen schrägen Steg 10 miteinander verbunden sind. Das Emblem 6 ist auf der Außenseite des Kofferraumdeckels 4 befestigt, beispielsweise aufgeklebt. Im Bereich dieses Emblems 6 ist der Kofferraumdeckel 4 mit einer Öffnung 12 versehen, in die eine Lichtscheibe 13 eingesetzt ist (Fig. 3). Sie füllt die Öffnung 12 nahezu vollständig aus. Die Außenseite 14 der Lichtscheibe 13 liegt bündig mit der Außenseite 15 des Kofferraumdekkels 4. Zwischen dem Rand der Lichtscheibe 13 und dem Rand 16 der Öffnung 12 verbleibt ein schmaler Spalt 17, der durch den Ring 7 des Emblems 6 von außen überdeckt wird. Die Lichtscheibe 13 ist in ihrer Umrißform an den Ring 7 angepaßt, so daß dieser den Spalt 17 von außen verdeckt. Dadurch sind aufwendige Maßnahmen zum Abdichten des Spaltes 17 von außen nicht erforderlich. Darum sind bei der Herstellung der Öffnung 12 im Kofferraumdeckel 4 keine engen Toleranzen einzuhalten.

Die Lichtscheibe 13 ist mit Abstand von ihrer Außenseite 14 mit einem umlaufenden Bund 18 versehen, der radial nach außen gerichtet ist und zur Abstützung einer Ringdichtung 19 dient. Mir ihr wird der Spalt 17 von der Innenseite des Kofferraumdeckels 4 aus abgedichtet, so daß von außen keine Feuchtigkeit und/oder Schmutz nach innen gelangen kann. Beim Einbau der Lichtscheibe 13 wird die Ringdichtung 19 elastisch verformt, so daß sie den Spalt 17 optimal von innen abdichtet.

Die Lichtscheibe 13 liegt mit dem umlaufenden Flansch 18 auf einer radialen Schulterfläche 20 eines Leuchtengehäuses 21 auf, in dem wenigstens ein Leuchtmittel 22, im Ausführungsbeispiel LEDs, untergebracht sind. Sie sitzen auf einer im Leuchtengehäuse 21 untergebrachten Platine 23. Das Leuchtengehäuse 21 ist mit einem verdickten, umlaufenden Rand 24 an der Innenseite des Karosseriedeckels 4 befestigt, beispielsweise angeklebt. Dieser Rand 24 überragt die radiale Schulterfläche 20, auf dem die Lichtscheibe 13 mit ihrem Bund 18 aufliegt. Er liegt außerdem mit seiner Umfangsfläche 25 an einer Innenseite 26 des Gehäuserandes 24 an (Fig. 4), so daß die Lichtscheibe 13 einwandfrei quer zu ihrer Achse lagegesichert ist. Die Innenseite 26 des Gehäuserandes 24 schließt rechtwinklig an die Schulterfläche 20 an.

Die Leuchtmittel 22 liegen mit Abstand hinter der Lichtscheibe 13 und strahlen das Licht durch die Lichtscheibe 13 nach außen. In das geschlossene Gehäuse 21 sind (nicht dargestellte) elektrische Zuleitungen geführt, um die Leuchtmittel 22 mit Strom zu versorgen.

Damit die Lichtscheibe 13, die aus lichtdurchlässigem Material, insbesondere einem entsprechenden Kunststoff besteht, von außen im Kofferraumdekkel 4 nicht zu erkennen ist, ist auf ihre Außenseite 14 eine Farbschicht aufgebracht, deren Farbton der Lackschicht auf dem Kofferraumdeckel 4 entspricht. Dadurch ist die Lichtscheibe 13 bei nicht eingeschalteten Leuchtmitteln 22 nicht als zusätzliches Bauteil im Kofferraumdeckel 4 zu erkennen. Darum ist bei nicht eingeschalteten Leuchtmitteln 22 am Kofferraumdeckel 4 lediglich das Emblem 6 sichtbar. Werden die Leuchtmittel 22 hingegen eingeschaltet, treten die von ihnen ausgesandten Strahlen durch die Lichtscheibe 13 und die Zwischenräume innerhalb des Emblems 6 nach außen. Die auf der Außenseite 14 der Lichtscheibe 13 aufgebrachte Farbschicht ist nur so dünn, daß das Licht mit ausreichender Helligkeit durch die Lichtscheibe 13 nach außen tritt. Die Leuchte 5 kann beispielsweise eine Bremsleuchte sein. Die Leuchtmittel 22 leuchten dann beim Betätigen der Bremse auf und senden ein entsprechendes Warnsignal durch die Lichtscheibe 13 nach hinten.

Die auf die Außenseite 14 der Lichtscheibe 13 aufgebrachte Farb- bzw. Lackschicht ist andererseits so dick, daß die Lichtscheibe von außen nicht durchscheint, so daß der Kofferraumdeckel 4 hinsichtlich seiner Farbgebung einheitlich ausgebildet ist.

Das Emblem 6 kann unterschiedlichste Formen haben, so die von den verschiedenen Automobilherstellern bekannten Kennzeichen. Darüber hinaus kann das Emblem 6 auch jede frei gewählte Form haben. Das Emblem 6 kann auch ein Bild, ein Wort, Zahlen, eine Kombination dieser Elemente und dergleichen sein. Die Umrißform der Lichtscheibe 13 richtet sich vorteilhaft nach der Umrißform des jeweiligen Emblems 6, damit der Übergang von der Lichtscheibe zum Rand der Einbauöffnung im Kofferraumdeckel 4 durch das Emblem selbst von außen verdeckt wird.

Die Montage des Leuchtengehäuses 21 ist einfach und kostengünstig durchführbar. Das Leuchtengehäuse 21 wird an die Rückseite des Kofferraumdekkels 4 so angelegt, daß die Lichtscheibe 13 die Öffnung 12 ausfüllt. Das Gehäuse 21 wird dann so an der Innenseite des Kofferraumdeckels 4 befestigt, daß die Außenseite 14 der Lichtscheibe 13 eine stetige Fortsetzung der Außenseite 15 des Kofferraumdeckels 4 bildet. Anschließend wird das Emblem 6 oder ein entsprechendes Symbol auf der Außenseite des Kofferraumdekkels 4 so montiert, daß der Spalt 17 zwischen dem Rand 16 der Öffnung 12 und der Lichtscheibe 13 verdeckt wird. Die Ringdichtung 19 wird vor dem Einbau des Leuchtengehäuses 21 vormontiert und so weit auf die Lichtscheibe 13 geschoben, bis sie auf dem radial nach außen gerichteten Ringflansch 18 aufliegt, der mit Abstand von der Außenseite 14 der Lichtscheibe 13 vorgesehen ist.

Das Emblem 6 selbst besteht aus einem Material, das Licht nicht durchläßt. Es ist aber auch möglich, das Emblem 6 selbst aus lichtdurchlässigem Material herzustellen. In diesem Fall ist der Kofferraumdeckel 4 im Bereich der jeweiligen Teile des Emblems 6 lichtdurchlässig ausgebildet. In dem in Fig. 2 dargestellten Ausführungsbeispiel sind in diesem Falle der Ring 7 sowie die drei Stege 9 bis 11 aus lichtdurchlässigem Material hergestellt. Die Flächen des Kofferraumdeckels 4 im Bereich zwischen dem Ring 7 und den Stegen 9 bis 11 sind nicht lichtdurchlässig, sondern nur im Bereich unterhalb des Ringes 7 sowie der Stege 9 bis 11. Solange die Leuchtmittel 22 nicht eingeschaltet sind, hat das Emblem 6 seinen eigenen Farbton. So kann das Emblem 6 beispielsweise chromfarben ausgebildet sein. Wird das Leuchtmittel 22 eingeschaltet, dringen die ausgesandten Strahlen durch den unterhalb des Ringes 7 und der Stege 9 bis 11 vorgesehenen lichtdurchlässigen Teil des Kofferraumdeckels 4 sowie durch den Ring 7 und die Stege 9 bis 11 selbst nach außen.

Es können aber auch das Emblem 6 und die Flächen des Kofferraumdeckels 4 im Bereich zwischen dem Ring 7 und den Stegen 9 bis 11 lichtdurchlässig sein.

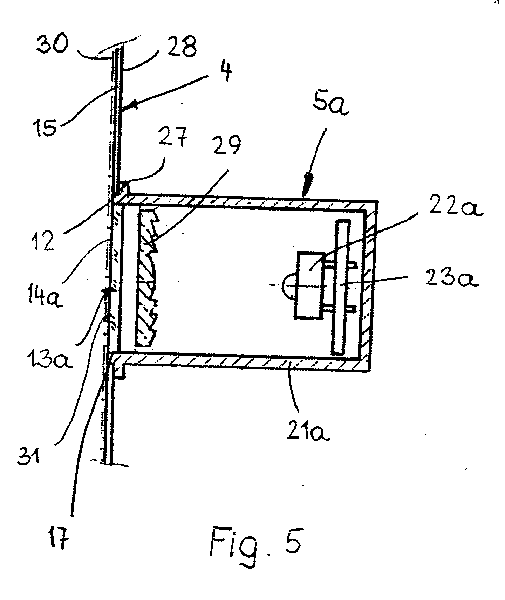

Fig. 5 zeigt eine weitere Ausführungsform einer Leuchte 5a. Sie hat das Leuchtengehäuse 21a, in dem wenigstens ein Leuchtmittel 22a untergebracht ist. Wie bei der vorigen Ausführungsform ist das Leuchtmittel 22a vorzugsweise eine LED, die auf der Platine 23a sitzt. Das Gehäuse 21a liegt mit einem radial nach außen ragenden Ringflansch 27 an der Innenseite 28 des Kofferraumdeckels 4 an. Er ist mit der Einbauöffnung 12 versehen, in welche das Leuchtengehäuse 21a mit seinem freien Rand ragt. In dieses Ende des Gehäuses 21a ist die Lichtscheibe 13a so eingesetzt, daß ihre Außenseite 14a bündig mit der Außenseite 15 des Kofferraumdeckels 4 liegt. Wie bei der vorigen Ausführungsform schließt die Lichtscheibe 13a das Leuchtengehäuse 21a.

Mit geringem Abstand hinter der Lichtscheibe 13a ist im Leuchtengehäuse 21a im Strahlweg der vom Leuchtmittel 22a ausgehenden Strahlen eine Optikscheibe 29, zum Beispiel eine Fresnellinse, untergebracht.

Auf dem Kofferraumdeckel 4 befindet sich eine durch eine strichpunktierte Linie angedeutete Lackschicht 30. Auch auf der Lichtscheibe 13a ist eine Lackschicht 31 vorhanden. Sie ist einerseits so dünn, daß das vom Leuchtmittel 22a ausgesandte Licht durch diese Lackschicht 31 hindurchtreten kann, andererseits jedoch die Lichtscheibe 13a von außen nicht erkennen läßt. Der Kofferraumdeckel 4 weist somit ein einheitliches Aussehen auf. Erst wenn das Leuchtmittel 22a eingeschaltet wird und die Strahlen durch die Lichtscheibe 13a und die Lackschicht 31 nach außen gelangen, wird erkennbar, daß in diesem Bereich die Leuchte 5a vorhanden ist.

Im Unterschied zur vorigen Ausführungsform wird der Spalt 17 zwischen dem Rand der Lichtscheibe 13a und dem Rand der Einbauöffnung 12 beispielsweise ausgespachtelt, so daß ein einwandfreier Übergang von der Lichtscheibe 13a zum Kofferraumdeckel 4 erreicht wird. Durch das anschließende Überlackieren wird die Spachtelmasse überdeckt, so daß sie nicht mehr sichtbar ist. Wie schon bei der vorigen Ausführungsform liegt die Lichtscheibe 13a mit ihrer Außenseite 14a bündig zur Außenseite 15 des Kofferraumdeckels 4. Er hat dadurch ein einheitliches Aussehen.

Bei beiden Ausführungsformen kann die Leuchte 5, 5a an jeder geeigneten Stelle des Kofferraumdeckels 4 des Kraftfahrzeuges vorgesehen sein. Der Kofferraumdeckel kann auch die Heckklappe eines Kraftfahrzeuges sein. Die Leuchte kann darüber hinaus auch an jedem anderen geeigneten Bereich der Karosserie des Fahrzeuges vorgesehen werden, so beispielsweise an den seitlichen vorderen und/oder hinteren Kotflügeln. Die Leuchten 5, 5a können unterschiedlichste Signalfunktionen ausüben, zum Beispiel eine Bremsleuchte, eine Blinkleuchte oder dergleichen.

Der Kofferraumdeckel 4 oder die Heckklappe des Kraftfahrzeuges können auch aus durchsichtigem Kunststoff gespritzt oder gepreßt und anschließend im gewünschten Farbton lackiert werden. Die Leuchte 5, 5a kann auch in diesem Falle in der beschriebenen Weise an der Innenseite des Kofferraumdeckels 4 oder der Heckklappe an einer beliebigen Stelle angebracht werden. Im Bereich der Leuchte 5, 5a ist die Lackschicht wiederum nur so dick, daß die Lichtscheibe 13, 13a überdeckt wird, das vom Leuchtmittel 22, 22a ausgesandte Licht jedoch in ausreichendem Maße nach außen gelangen kann.

Es ist ferner möglich, den Kofferraumdeckel 4, die Heckklappe oder ein anderes Karosserieteil des Fahrzeuges aus undurchsichtigem Kunststoff herzustellen und die Lichtscheibe 13, 13a aus einem durchsichtigen Kunststoff zu spritzen. Anschließend werden der Kofferraumdeckel 4, die Heckklappe oder der entsprechende Karosserieteil und/oder die Lichtscheibe 13, 13a in der Wagenfarbe lackiert, so daß die Lichtscheibe von außen nicht erkennbar ist.

Anstelle der Lichtscheibe 13, 13a ist es möglich, im Bereich der Leuchte 5, 5a im Karosserieteil eine feine Perforation vorzusehen. Die Perforationsöffnungen werden mit transparentem Material gefüllt, insbesondere ausgegossen. Da die Perforationsöffnungen sehr kleinen Durchmesser haben, sind sie von außen nicht erkennbar. Das von dem hinter diesen Perforationsöffnungen befindliche Leuchtmittel 22, 22a ausgesandte Licht kann durch das transparente Material in den Perforationsöffnungen nach außen gelangen. Es ist auch möglich, den Austritt der Perforationsöffnungen mit der Lackschicht 31 zu bedecken, die wiederum nur so dick ist, daß die Perforationsöffnungen von außen zuverlässig nicht zu erkennen sind, das durch sie hindurchtretende Licht aber nach außen lassen.

Die Lichtscheibe 5a kann die unterschiedlichsten Umrißformen haben. Sie kann beispielsweise runden, insbesondere kreisförmigen, aber auch eckigen, insbesondere rechteckigen Umriß aufweisen. Entsprechend können die Perforationsöffnungen in einem runden oder eckigen Bereich vorgesehen sein.

## Patentansprüche

1. Einrichtung, bestehend aus einem Karosserieteil (4) eines Fahrzeuges, vorzugsweise eines Kraftfahrzeuges, und einer Leuchte (5, 5a) mit mindestens einem Gehäuse (21, 21a), in dem wenigstens ein Leuchtmittel (22, 22a) untergebracht ist und das eine Lichtscheibe (13, 13a) aufweist, die in einer Öffnung (12) des Karosserieteiles (4) liegt, an dessen Innenseite das Gehäuse (21, 21a) vorgesehen ist, und der im Bereich der Leuchte (5, 5a) für die vom Leuchtmittel (22, 22a) ausgesandten Strahlen zumindest teilweise durchlässig ist, indem die Außenseite (14, 14a) der bündig mit der Außenseite (15) des Karosserieteiles (4) liegenden Lichtscheibe (13, 13a) mit einer lichtdurchlässigen Schutzschicht (31) versehen ist, die eine solche Dicke hat, daß die Lichtscheibe (13, 13a) bei ausgeschaltetem Leuchtmittel (22, 22a) nicht sichtbar ist, bei eingeschaltetem Leuchtmittel (22, 22a) Licht hindurchtreten läßt,
**dadurch gekennzeichnet, daß** das Gehäuse (21, 21a) mit einem umlaufenden Rand (24, 27) versehen ist, der an der Innenseite des Karosserieteiles (4) anliegend befestigt ist.

2. Einrichtung nach Anspruch 1,
**dadurch gekennzeichnet, daß** die Lichtscheibe (13, 13a) das Gehäuse (21, 21a) der Leuchte (5, 5a) verschließt.

3. Einrichtung nach Anspruch 1 oder 2,
**dadurch gekennzeichnet, daß** die Schutzschicht (31) im gleichen Farbton gehalten ist wie das Fahrzeug.

4. Einrichtung nach einem der Ansprüche 1 bis 3,
**dadurch gekennzeichnet, daß** der Karosserieteil (4) der Kofferraumdeckel des Fahrzeuges ist.

5. Einrichtung nach einem der Ansprüche 1 bis 3,
**dadurch gekennzeichnet, daß** der Karosserieteil (4) die Heckklappe des Fahrzeuges ist.

6. Einrichtung nach einem der Ansprüche 1 bis 5,
**dadurch gekennzeichnet, daß** der Karosserieteil (4) aus lichtdurchlässigem Kunststoff besteht, der vorteilhaft mit einer Lackschicht (30) überzogen ist.

7. Einrichtung nach Anspruch 6,
**dadurch gekennzeichnet, daß** der Karosserieteil (4) und der lichtdurchlässige Bereich aus lichtdurchlässigem Kunststoff, vorzugsweise aus demselben Kunststoff, bestehen.

8. Einrichtung nach einem der Ansprüche 1 bis 7,
**dadurch gekennzeichnet, daß** ein Spalt (17) zwischen dem Rand der Lichtscheibe (13, 13a) und dem Rand (16) der Öffnung (12) abgedeckt ist.

9. Einrichtung nach Anspruch 8,
**dadurch gekennzeichnet, daß** der Spalt (17) von einem auf der Außenseite (15) des Karosserieteiles (4) befestigten, vorzugsweise lichtundurchlässigem Abdeckteil (6) überdeckt ist, das vorteilhaft ein Emblem, ein Symbol oder dergleichen ist.

10. Einrichtung nach einem der Ansprüche 1 bis 9,
**dadurch gekennzeichnet, daß** das Gehäuse (21a) mit seinem freien Rand in die Öffnung (12) des Karosserieteiles (4) ragt.

11. Einrichtung nach Anspruch 10,
**dadurch gekennzeichnet, daß** die Lichtscheibe (13a) in das freie Ende des Gehäuses (21 a) eingesetzt ist.

12. Einrichtung nach einem der Ansprüche 9 bis 11,
**dadurch gekennzeichnet, daß** der Karosserieteil (4) im Bereich unter dem Abdeckteil (6) wenigstens teilweise lichtdurchlässig ist.

13. Einrichtung nach einem der Ansprüche 9 bis 12,
**dadurch gekennzeichnet, daß** der Karosserieteil (4) in dem vom Abdeckteil (6) umschlossenen Bereich lichtundurchlässig ist.

14. Einrichtung nach einem der Ansprüche 8 bis 13,
**dadurch gekennzeichnet, daß** der Spalt (17) zwischen dem Rand der Lichtscheibe (13, 13a) und dem Rand (16) der Öffnung (12) des Karosserieteiles (4) innenseitig abgedeckt ist.

15. Einrichtung nach Anspruch 14,
**dadurch gekennzeichnet, daß** die Lichtscheibe (13) mit Abstand von der Innenseite des Karosserieteiles (4) wenigstens einen Anlageteil (18) für wenigstens ein Dichtelement (19), vorzugsweise einen O-Ring, aufweist, und daß vorteilhaft der Anlageteil (18) ein radial von der Lichtscheibe (13) abstehender Ringflansch ist.

16. Einrichtung nach Anspruch 15,
**dadurch gekennzeichnet, daß** der Anlageteil (18) an einer Schulterfläche (25) des Gehäuses (21) der Leuchte (5) anliegt.

17. Einrichtung nach einem der Ansprüche 1 bis 16,
**dadurch gekennzeichnet, daß** die Lichtscheibe (13, 13a) durch das Gehäuse (21, 21a) zentriert ist.

18. Einrichtung nach einem der Ansprüche 1 bis 17,
**dadurch gekennzeichnet, daß** im Strahlengang des vom Leuchtmittel (22a) ausgesandten Lichtes wenigstens ein Optikelement (29), wie eine Fresnellinse, liegt.

19. Einrichtung nach einem der Ansprüche 1 bis 18,
**dadurch gekennzeichnet, daß** das Leuchtmittel (22, 22a) eine LED ist.

## Claims

1. Arrangement comprising a body part (4) of a vehicle, preferably of a motor vehicle, and a light fitting (5, 5a), with at least one housing (21, 21a) in which at least one lamp (22, 22a) is accommodated and which has a light-diffusing lens (13, 13a) which lies in an opening (12) of the body part (4), on the inside of which the housing (21, 21a) is provided and which is at least partially transparent in the region of the light fitting (5, 5a) for the beams emitted by the lamp (22, 22a) by the outside (14, 14a) of the light-diffusing lens (13, 13a), which lies flush with the outside (15) of the body part (4), being provided with a light-permeable protective layer (31) which is of a thickness such that, when the lamp (22, 22a) is switched off, the light-diffusing lens (13, 13a) is not visible and, when the lamp (22, 22a) is switched on, light can pass through it, **characterized in that** the housing (21, 21a) is provided with an encircling edge (24, 27) which is fixed such that it bears against the inside of the body part (4).

2. Arrangement according to Claim 1, **characterized in that** the light-diffusing lens (13, 13a) closes the housing (21, 21a) of the light fitting (5, 5a).

3. Arrangement according to Claim 1 or 2,
**characterized in that** the protective layer (31) is kept in the same shade of colour as the vehicle.

4. Arrangement according to one of Claims 1 to 3, **characterized in that** the body part (4) is the boot lid of the vehicle.

5. Arrangement according to one of Claims 1 to 3, **characterized in that** the body part (4) is the tailgate of the vehicle.

6. Arrangement according to one of Claims 1 to 5, **characterized in that** the body part (4) is composed of light-permeable plastic which is advantageously covered with a layer of paint (30).

7. Arrangement according to Claim 6, **characterized in that** the body part (4) and the light-permeable region are composed of light-permeable plastic, preferably of the same plastic.

8. Arrangement according to one of Claims 1 to 7, **characterized in that** a gap (17) between the edge of the light-diffusing lens (13, 13a) and the edge (16) of the opening (12) is covered.

9. Arrangement according to Claim 8, **characterized in that** the gap (17) is covered by a preferably light-impermeable covering part (6) which is fixed on the outside (15) of the body part (4) and is advantageously an emblem, a symbol or the like.

10. Arrangement according to one of Claims 1 to 9, **characterized in that** the housing (21a) protrudes with its free edge into the opening (12) of the body part (4).

11. Arrangement according to Claim 10, **characterized in that** the light-diffusing lens (13a) is inserted into the free end of the housing (21a).

12. Arrangement according to one of Claims 9 to 11, **characterized in that** the body part (4) is at least partially light-permeable in the region below the covering part (6).

13. Arrangement according to one of Claims 9 to 12, **characterized in that** the body part (4) is light-impermeable in the region surrounded by the covering part (6).

14. Arrangement according to one of Claims 8 to 13, **characterized in that** the gap (17) between the edge of the light-diffusing lens (13, 13a) and the edge (16) of the opening (12) of the body part (4) is covered on the inside.

15. Arrangement according to Claim 14, **characterized in that** the light-diffusing lens (13) has at least one bearing part (18) for at least one sealing element (19), preferably an O-ring, at a distance from the inside of the body part (4), and **in that** the bearing part (18) is advantageously an annular flange protruding radially from the light-diffusing lens (13).

16. Arrangement according to Claim 15, **characterized in that** the bearing part (18) bears against a shoulder surface (25) of the housing (21) of the light fitting (5).

17. Arrangement according to one of Claims 1 to 16, **characterized in that** the light-diffusing lens (13, 13a) is centred by the housing (21, 21a).

18. Arrangement according to one of Claims 1 to 17, **characterized in that** at least one optical element (29), such as a Fresnel lens, is situated in the beam path of the light emitted by the lamp (22a).

19. Arrangement according to one of Claims 1 to 18, **characterized in that** the lamp (22, 22a) is an LED.

## Revendications

1. Dispositif constitué par une partie carrosserie (4) d'un véhicule, de préférence d'un véhicule automobile, et d'un feu (5, 5a) pourvu d'au moins un boîtier (21, 21a) dans lequel est logé au moins un moyen d'éclairage (22, 22a) et qui comprend une plaque d'éclairage (13, 13a) qui se trouve dans une ouverture (12) de la partie carrosserie (4), sur le côté intérieur de laquelle est prévu le boîtier (21, 21a) et qui est au moins partiellement transparente aux rayons émis par le moyen d'éclairage (22, 22a) dans la zone du feu (5, 5a), du fait que la face extérieure (14, 14a) de la plaque d'éclairage (13, 13a) située en affleurement avec la face extérieure (15) de la partie carrosserie (4) est pourvue d'une couche de protection transparente (31) qui présente une épaisseur telle que la plaque d'éclairage (13, 13a) n'est pas visible lorsque le moyen d'éclairage (22, 22a) est éteint, mais permet le passage de lumière lorsque le moyen d'éclairage (22, 22a) est allumé,
**caractérisé en ce que** le boîtier (21, 21a) est pourvu d'un bord périphérique (24, 27) qui est fixé en appui contre le côté intérieur de la partie carrosserie (4).

2. Dispositif selon la revendication 1,
**caractérisé en ce que** la plaque d'éclairage (13, 13a) referme le boîtier (21, 21a) du feu (5, 5a).

3. Dispositif selon la revendication 1 ou 2,
**caractérisé en ce que** la couche de protection (31) est prévue avec la même nuance de couleur que le véhicule.

4. Dispositif selon l'une des revendications 1 à 3,
**caractérisé en ce que** la partie carrosserie (4) est le couvercle du coffre du véhicule.

5. Dispositif selon l'une des revendications 1 à 3,
**caractérisé en ce que** la partie carrosserie (4) est le hayon du véhicule.

6. Dispositif selon l'une des revendications 1 à 5,
**caractérisé en ce que** la partie carrosserie (4) est constituée d'une matière plastique transparente qui est avantageusement revêtue d'une couche de peinture (30).

7. Dispositif selon la revendication 6,
**caractérisé en ce que** la partie carrosserie (4) et la zone transparente sont constituées d'une matière plastique transparente, de préférence de la même matière plastique.

8. Dispositif selon l'une des revendications 1 à 7,
**caractérisé en ce qu'**un intervalle (17) entre le bord de la plaque d'éclairage (13, 13a) et le bord (16) de l'ouverture (12) est recouvert.

9. Dispositif selon la revendication 8,
**caractérisé en ce que** l'intervalle (17) est recouvert par une partie de recouvrement (6) de préférence opaque fixée sur la face extérieure (15) de la partie carrosserie (4) et qui est avantageusement un emblème, un symbole ou similaire.

10. Dispositif selon l'une des revendications 1 à 9,
**caractérisé en ce que** le boîtier (21a) pénètre par son bord libre dans l'ouverture (12) de la partie carrosserie (4).

11. Dispositif selon la revendication 10,
**caractérisé en ce que** la plaque d'éclairage (13a) est mise en place dans l'extrémité libre du boîtier (21a).

12. Dispositif selon l'une des revendications 9 à 11,
**caractérisé en ce que** la partie carrosserie (4) est au moins partiellement transparente dans la zone au-dessous de la partie de recouvrement (6).

13. Dispositif selon l'une des revendications 9 à 12,
**caractérisé en ce que** la partie carrosserie (4) est opaque dans la zone entourée par le partie de recouvrement (6).

14. Dispositif selon l'une des revendications 8 à 13,
**caractérisé en ce que** l'intervalle (17) entre le bord de la plaque d'éclairage (13, 13a) et le bord (16) de l'ouverture (12) de la partie carrosserie (4) est recouvert du côté intérieur.

15. Dispositif selon la revendication 14,
**caractérisé en ce que** la plaque d'éclairage (13) comprend, à distance de la face intérieure de la partie carrosserie (4), au moins une partie d'appui (18) pour au moins un élément d'étanchéité (19), de préférence un joint torique, et **en ce que** la partie d'appui (18) est avantageusement une bride annulaire dépassant radialement de la plaque d'éclairage (13).

16. Dispositif selon la revendication 15,
**caractérisé en ce que** la partie d'appui (18) s'appuie contre une surface d'épaulement (25) du boîtier (21) du feu (5).

17. Dispositif selon l'une des revendications 1 à 16,
**caractérisé en ce que** la plaque d'éclairage (13, 13a) est centrée par le boîtier (21, 21a).

18. Dispositif selon l'une des revendications 1 à 17,
**caractérisé en ce que** dans la trajectoire des rayons de la lumière émise par le moyen d'éclairage (22a) se trouve au moins un élément optique (29), tel qu'une lentille de Fresnel.

19. Dispositif selon l'une des revendications 1 à 18,
**caractérisé en ce que** le moyen d'éclairage (22, 22a) est une diode électroluminescente.
